# EUROPEAN PATENT SPECIFICATION

(11) **EP 2 078 687 B1**
(45) Date of publication and mention of the grant of the patent: **15.06.2011**
(21) Application number: 09446501.0
(22) Date of filing: 08.01.2009
(51) Int. Cl.: B65G 59/08, B65G 59/10

(54) **Arrangement for the stripping of layers of timber from a stack of timber**
Vorrichtung zum Entstapeln von Lagen von Holzbretterstapeln
Système de désempilage de planches par couche

(30) Priority: 10.01.2008 SE 0800055
(43) Date of publication of application: 15.07.2009
(73) Proprietor: Renholmen AB, 930 47 Byske (SE)
(72) Inventor: Marklund, Gunnar, 930 47, Byske (SE); Lindberg, Bertil, 934 41, Ersmark (SE)
(74) Representative: Nikolopoulou, Sofia

(56) References cited:
- WO-A-96/05130
- DE-A1- 3 148 003
- DE-C- 969 938
- GB-A- 1 552 527
- SE-C- 168 852
- SE-C- 178 221
- SE-C2- 508 147
- US-A- 1 686 088
- US-A- 3 565 266
- US-A- 4 106 635

## Description

The present invention concerns an arrangement for the stripping of layers of timber, in particular boards and planks, from a stack of timber according to the preamble of claim 1.

Board lifts are used in adjustment and sorting units in order to distribute a stack of boards stacked with laths. The stack of boards is in contact with a number of stationary lift members that are components of the board lift and that are inclined approximately 45° to the horizontal plane. The lowermost layer of the stack of boards rests on one or several arms that can be displaced along the lift members and that form a right angle with the said lift members. During the removal or stripping of a layer of boards, the stack is lifted from below by a distance that corresponds to the thickness of one layer of boards such that the uppermost layer reaches up above the forward edge of the lift members, thus allowing one layer of boards at a time, by the influence of gravity, to slide over the edge onto an inclined plane designed as a roller or slider pathway. The timber or the layer of boards is carried down to a collecting transporter while the stacking laths fall down onto a separate transporter from which they are normally taken back to a lath-placement device in order to be reused. During the release, the lowermost board of the uppermost layer of timber is displaced or slides, as do other boards in the layer, past the forward edge of the lift member whereby the released layer of timber boards is transferred in an orderly manner to the collecting transporter, which in turn feeds the timber to subsequent consumers. In order for the layer of boards that has been stripped to pass in an orderly manner over the forward edge and onwards down towards the subsequent horizontal transporter, it is important that the boards during the complete stripping procedure are parallel with the boards in the stack.

One problem with known arrangements is that the stripping does not always take place in an orderly manner. The lowermost board of the layer that is to be stripped does not in certain cases pass over the upper edge of the forward lift member simultaneously along its complete length, but becomes caught such that, for example, one edge of the board starts to slide down before the other. The consequence of one end of the board starting to slide down before its other end is normally that all boards in the layer will not be parallel with other boards in the stack of boards when they reach the subsequent horizontal transporter. There are many causes to the problem: these are random and they may be caused by variations in dimension of the boards, variations in dimension between the layers of boards in the stack and intermediate laths, and combinations of these causes. The problems are particularly serious during the stripping of thin timber, while the problems seldom arise during the stripping of large timber. Not seldom, the thinner pieces of timber lie fully or partially on each other when they reach the horizontal transporter. A consequence of such disorder between the boards that have been stripped is that the subsequent transport and the treatment in subsequent consumers, for example, the units known as "single-piece distributors" are made more difficult. In order to avoid as far as is possible damage to boards and, in the worst case, breakdown of the machine, stripping devices of this type must be monitored and stopped as soon as problems arise, whereby the boards must be manually placed in layers onto the subsequent transporter.

SE 508 147 C2 discloses an arrangement for stripping of layers of timber according to the preamble of claim 1, and comprising a lift that supports a stack of timber which is inclined at an angle to the horizontal plane. A stripping transporter located above the stack of timber strips one layer at a time through interaction with the uppermost layer of timber in the stack and delivers it to a horizontal transporter. The stripping transporter can be switched between two modes of functioning comprising a stopping mode in which the stripping transporter is essentially locked against motion and an active operating mode in which the stripping transporter is active. In the stopped position, the entire layer of timber is retained on the stack of timber through interaction with the said stripping transporter, and in the active operating position, the entire layer of timber is withdrawn from the stack through interaction with the said stripping transporter. In the known arrangement the stripping transporter and the subsequent are connected to a common drive.

Even if the control of the stripping action of currently known devices has improved considerably, there is always a striving for a further improvement and the object of the present invention is to achieve a device offering an improved stripping rate of layers of timber from a stack.

The purpose of the present invention is thus to achieve an arrangement that makes it possible to strip layers of timber from the stack of timber more effective in an orderly manner, i.e. to strip layers of timber from the stack more effectively still having full control of each of layers stripped from the pile in order to avoid a troublesome disorder of the stripped timber.

This purpose is achieved through the arrangement being given the characteristics specified in claim 1.

The invention will be described in more detail below with reference to the attached drawings, in which:
Figure 1 shows an arrangement for the stripping of layers of timber from a stack of timber according to the invention, seen from the side, and
Figure 2 shows the arrangement according to Figure 1 seen from above.

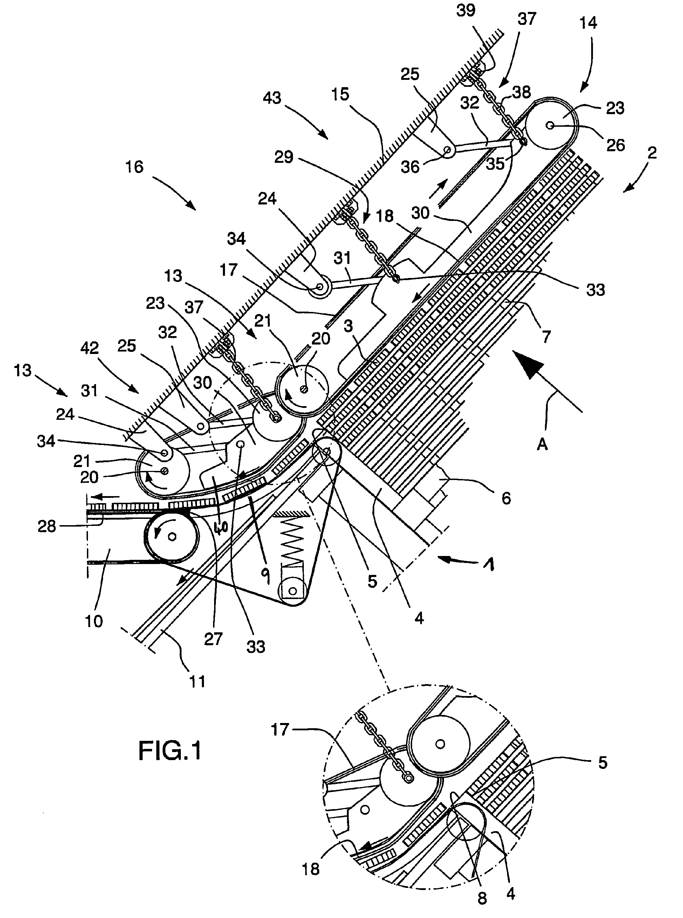

With reference to Figure 1, a lift arrangement 1 is shown schematically that supports a stack 2 with layers 3 of boards, which boards form an angle of, for example, 45° with the horizontal plane. The lift arrangement 1 comprises several stationary lift members 4 with which the forward edge 5 of the stack of boards 2 is in contact. The lowermost layer of the stack of boards 2 rests on one or several arms 6 that can be displaced along the lift members 4 and that form a right angle with the said lift members. Laths 7 are located between the layers of boards. The uppermost layer of boards is released or stripped from the stack 2 by displacement of the arms 6 upwards along the lift members 4 in the direction towards an uppermost edge 8 of the lift members through a distance that corresponds to the thickness of a layer of boards such that the forward edge 5 of the uppermost layer of boards reaches up over the uppermost edge of the lift members. The lift displacement is illustrated with the arrow A in Figure 1, and it should also be understood in the drawing that the said upper edge 8 may be arranged such that it can be adjusted in height. Sliding on the said laths 7, a released layer of boards 3 is caused to move downwards, whereby the boards are led by an inclined roller plane 9 down to a subsequent essentially horizontal transporter 10 for onwards transport on this transporter. The part of the roller plane 9 that interacts with the boards 3 may, as is shown in the drawing, be constituted by spring-loaded endless mobile elements that are not themselves driven, a curved glide sheet, or a supporting part provided with rollers. In order to form a gentle and flexible transition for the boards 3 that have been freed from the stack 2, the active surface of the curved part has been given a concave curved form that faces the horizontal transporter 10. The laths 7 in association with the release fall onto a separate transporter 11 and are taken to a lath-placement device (not shown in the drawings) in order there to be reused.

A stripping transporter 43 is arranged in connection with the lift arrangement 1, designed for interaction with the uppermost layer of boards 3 of the stack of boards 2 such that the layer of boards is retained in the stopped position of the stripping transporter and are fed down onto the horizontal transporter 10 when the stripping transporter is activated. The stripping transporter 43 has a forward end generally denoted by 13 that face down towards the horizontal transporter 10, and a rear end generally denoted by 14 that extends somewhat past or beyond the rear edge of the uppermost layer of boards 3 in the stack 2.

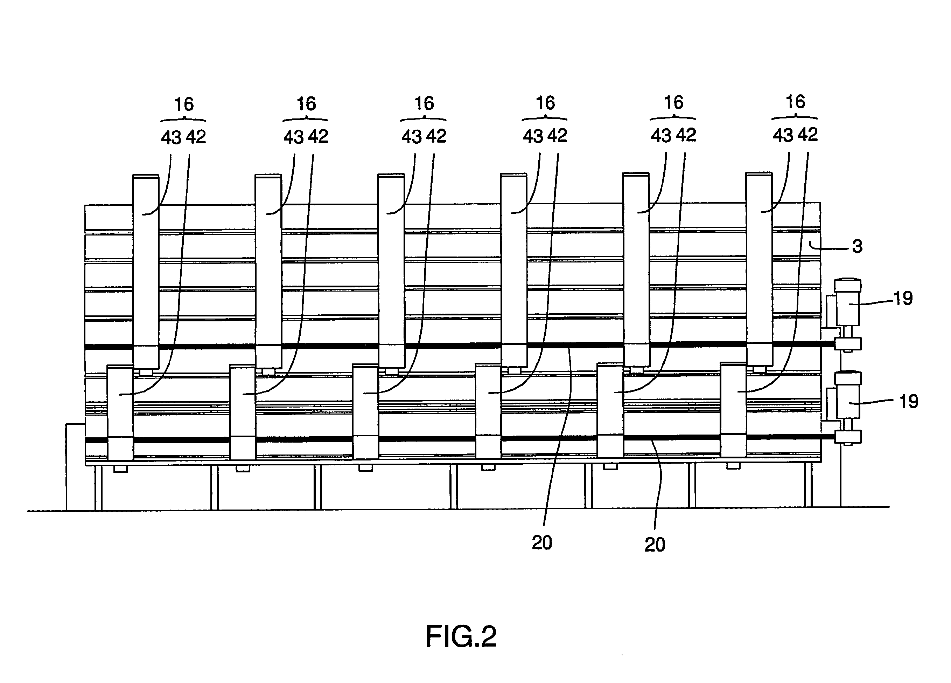

With reference to Figure 2, the stripping transporter 43 comprises a number of stripping units 16 supported by an upper frame 15. At least one endless mobile stripping element 17 that can be rotated is a component of each stripping unit 16. The said stripping units 16 are evenly distributed separated from each other along the longitudinal direction of the stacked boards 3 with the endless stripping elements 17 extending in the transverse direction of the stacked boards. The stripping elements 17 are flexible and may be constituted by bands, belts or chains whose lowermost part 18, which faces the layer of boards 3, demonstrates large friction with the layer of boards 3 through the influence of an applied elastomeric material such as rubber or similar.

The stripping units 16 are driven with the aid of a drive system consisting of a drive source 19 with an electric motor whose rate of revolution can be controlled and that is placed in connection in a manner that transmits motion with a drive shaft 20 that extends transversely through the pathway of each endless mobile stripping element 17. When the motor is stopped and not active, the stripping element 17 is essentially locked against rotation such that the uppermost layer of boards 3 is retained in place against the stripping element. The drive shaft 20 is mounted on bearings in a manner that allows rotation and is connected to the frame 15. It is intended for synchronous driving of the stripping units 16 that are placed one after the other along a line with a given separation between them. A driving wheel 21 is mounted on the drive shaft in connection with each stripping unit 16. The driving wheel 21 is located within the pathway of the associated stripping element 17 and is placed in connection in a manner that transfers motion with the inner surface of the stripping element that faces in towards the centre. As is best made clear by the dash-dot contour line shown in the partial enlargement in Figure 1, the stripping element 17 is driven through interaction between cogged teeth 22 arranged around the periphery of the driving wheel 21 and the inner surface of the relevant stripping element 17.

As is made clear by Figure 1, the driving wheel 21 forms at the same time one of the two guide wheels around which the stripping element 17 passes. The said guide wheels define the forward end 13 and the rear end 14 of the transport unit 16, whereby the said rear end is defined by a non-driven rear guide wheel 23. The reference numbers 24 and 25 denote first and second brackets, respectively, arranged on the frame. The rear guide wheel 23 may be rotated around a transverse shaft 26, and whose extent is limited to that of the relevant stripping unit 16. The rear guide wheel 23 is located in such close association with the rear edge of the uppermost layer of the stack of boards 2 that the last board of the uppermost layer of boards 3 together with the other boards in the layer that lay in front of it can be withdrawn from the stack 2 in interaction with the lower part 18 of the stripping element 17.

With reference to Figure 1, it should be noticed that each transport stripping unit 16 is divided into forward and rear transport subunits, comprising a collecting unit and stripping unit generally denoted by 42 and 43, respectively.

As is made clear by Figure 1, the driving wheel 21 is so placed relative to the horizontal transporter 10 that a narrow gap 27 is formed between the lower part 18 of the stripping element 17 and the upper part 28 of the opposing collecting transporter 10 that is located in this region. The speed of the driving wheel 21 of the collecting transporter 42 is synchronised to the speed of the driving wheel 21 of the horizontal transporter 10 such that the layer of boards 3 is transported forwards through the gap 27.

A suspension system 29 is a component of each stripping unit 16 by which the stripping element 17 that is endlessly mobile under the frame 15 can pivot around the drive shaft 21. The suspension system 29 comprises a support means 30 that is in contact with the boards and that is located within the closed pathway that is defined by the stripping element 17, extending as a rail in the longitudinal direction of the stripping element between the driving wheel 21 and the guide wheel 23. The task of the support means 30 that makes contact with the inside of the stripping element 17 is to support a considerable part of the lower part 18 of the stripping element 17 such that the said lower part makes contact along its complete length with the uppermost layer of boards 3 and is parallel with this layer. The support means 30 has a thicker part at its rear end, in which the guide wheel 23 is supported in bearings through the shaft 26 in a manner that allows rotation.

The support means 30 is connected in a manner that allows pivoting with the upper frame 15 through parallel forward 31 and rear 32 link arms. The forward link arm 31 has a lower end that is joined at point 33 in a manner that allows pivoting to the support means 30. The forward link arm 31 has an upper end that is jointed at point 34 to the frame 15 through the first bracket 24. The rear link arm 32 is designed in essentially the same manner as the forward link arm and it has a lower end that is joined at point 35 in a manner that allows pivoting to the support means 30 and an upper end that is in a similar manner joined at point 36 to the frame 15 through the rear bracket 25. When rotating around the drive shaft 21, the support means 30 rotates under the influence of gravity downwards in a direction from the upper ends 34, 36 of the link arms 31, 32. In other words, the support means 30 rotates downwards in a direction towards the uppermost layer of boards 3 of the stack of boards 2. The distance of the support means 30 to the uppermost layer of boards 3 of the stack of timber 2 is limited when pivoting downwards by a pivoting limiting means 37 arranged at each link arm, which means has been so selected that it offers free passage of the support means 30 in an upwards direction towards the uppermost frame 15 or the uppermost ends 34, 36 of the link arms 31, 32. In other words, in the upward lift direction of the stack of boards 2, denoted by the arrow A. The means 37 of limiting pivoting comprises a chain 38, the ends of which are attached to the frame 15 and the support means 30 that makes contact with the boards, respectively. A screw means 39 allows the length of the chain to be altered, and thus the height of the support means 30 that makes contact with the boards or its level above the board lift 1 also to be altered. It should be understood that it is possible for the means 37 of limiting pivoting to comprise any form of pressurising means such as springs of gas or spiral type, in particular for the case in which it should be necessary to place the support means 30 that makes contact with the boards in contact against the uppermost layer of boards 3 with force in order to obtain the friction required between the lower part 30 of the stripping elements 17 and the layer of boards 3. The forward end part 40 of the support means 30 that interacts with the inside of the stripping element 17 is convex and so curved that it fits against the concave surface of the inclined roller plane 9 that acts to stripping the boards. The movements of the boards during the transition from the stack 2 can in this way be guided and controlled in a continuous manner for the complete pathway down to the horizontal transporter 10.

One of the great advantages with stripping units 16 arranged in a line whose support means 30 that makes contact with the inside of the stripping element 17 has free travel upwards is that they can pivot independently of each other in the upwards lift direction. This means that the stripping transporter 43 can adapt to any errors in the stack of timber 2, in particular to the occurrence of shape deviations in the uppermost layer of the stack of timber, and to the case in which the stack tilts or presents off-square. Furthermore, since the uppermost layer of boards 3 in the stack 2 that has been elevated does not fall in an uncontrolled manner downwards but is held in place through interaction with the lowermost parts 18 of the endless stripping elements 17 that face the stack of boards 2, it should be understood that the layer of boards 3 can be elevated such that it is located above the uppermost edge 8 of the lift members 4 by a distance that safely exceeds the thickness of the boards before the layer of boards is released on its way downwards through activation of the stripping transporter 43. The risk that the lowermost board in the layer that has been stripped does not pass over the uppermost edge 8 of the forward lift member 4 simultaneously along its complete length, and the risk that the board gets stuck, are thus significantly reduced.

Figure 2 makes it most clear that the combined unit 16 of a collecting unit and a stripping unit 42, 43 are driven independently of each other with the aid of a driving system consisting of a drive source 19 with an electric motor whose rate of revolution can be controlled. The said motor can be started and stopped. The said motor 19 is placed in connection in a manner that transmits motion with a drive shaft 20 that extends transversely through the pathway of the endless mobile stripping element 17. The drive shaft 20 is mounted on bearings in a manner that allows rotation and is connected to the frame 15. It is intended for synchronous driving of the combined units 16 that are placed one after the other along a line with a given separation between them and that are components of the units 42 and 43. Each collecting unit 42 and stripping unit 43 has for this purpose a driving wheel 21 mounted onto the associated drive shaft 20.

As is made most clear by the partial enlargement in Figure 2, collecting 42 and stripping units 43 that are components of each unit 16 are displaced sideways and arranged in an overlapping manner in the region of the upper edge 8 of the lift members. During a stripping operation, the uppermost layer of boards in the stack 2 is displaced first through the influence of the stripping unit 43 to the forward collecting unit 42 and then via this unit in interaction with the inclined roller plane 9 onwards down to the horizontal transporter 10. One of the reasons for the overlapping placement is to maintain the transition between the both units 42, 43 as short as possible. The fact that the stripping and collecting units 42, 43 can be driven independently of each other allows a significant advantage, through the elevating movement, as is shown by the arrow A, can begin while the layer of boards is still being transported. This means that the elevating movement can start as soon as the last board in the layer 3 has been delivered from the stripper unit 43 to the forward collecting unit 42. The stripper unit 43 is stopped at this position and the stripper element 17 is held locked to prevent rotation such that the uppermost layer 3 is kept in place on the stack 2 in interaction with the lower part 18 of the stripper element 17.

With reference to Figure 1, the arrangement works in the following manner: The uppermost layer of boards 3 is elevated upwards to make contact with the lower part 18 of the endless mobile stripper element 17 of the upper stripping transporter 43. The lower forward edge of the uppermost layer of boards 3 is now located just above the upper edge 8 of the forward lift member 4 and is held retained on the stack through the influence of the stripper element 17. When the layer of boards 3 is to be released, the stripping transporter 43 is activated such that the uppermost layer of boards 3 is stripped off from the stack 2. The stripped layer 3 moves downwards, passing between forward end edge part 40 of the support means 30 that makes contact with the boards and that of the inclined roller plane 9, the gap 27 and onwards out onto the horizontal transporter 10. As soon as the complete layer of boards 3 has passed through the gap 27, the stripping transporter 43 is stopped whereby the lift arrangement 1 is activated such that a new layer of boards 3 is located in a position for stripping.

The present arrangement is not limited to what has been described above and shown in the drawings: it can be changed and modified in a number of different ways within the framework of the innovative concept specified in the attached patent claims.

## Claims

1. An arrangement for the stripping of layers of pieces of timber (3), in particular boards and planks, comprising a lift arrangement (1) that, inclined at an angle to the horizontal plane, supports a stack (2) of timber, a stripping transporter (43) that is located above the stack of timber and strips one layer at a time through interaction with the uppermost layer of timber in the stack of timber perpendicular to the longitudinal direction of the timber whereby the stripped layer of timber is delivered to a subsequent collecting transporter (42) and therefrom to a horizontal transporter (10), whereby the stripping transporter (43) is placed in connection in a manner that transfers motion with a driving source (19) with which the stripping transporter (43) can be switched between two modes of functioning comprising a stopping mode in which the stripping transporter (43) is essentially locked against motion and an active operating mode in which the stripping transporter (43) is active, whereby the stripping transporter (43) when switched in its stopped mode, the entire layer of timber is retained on the stack of timber (2) through interaction with the said stripping transporter, and when switched in its active operating mode, the entire layer of timber is withdrawn from the stack through interaction with the said stripping transporter, each of the stripping transporter (43) and the subsequent collecting transporter (42) is comprised of a number of separate transport units (16) each having an endless mobile stripping element (17) that can be rotated and whose lowermost part (18) faces the timber (3), **characterised in that** the stripping transporter (43) and the subsequent collecting transporter (42) are driven independently of each other and that the lift arrangement (1) is arranged to start while timber is till being transported by the subsequent collecting transporter (42).

2. The arrangement according to claim 1, whereby the collecting transporter (42) can also be switched between an active operating and a stopped mode, and is arranged to be in its active operating mode for transporting a first layer of timber forward while at the same time a following second layer of timber is retained on the stack of timber (2) through interaction with the said stripping transporter (43) being switched in its stopped position.

3. The arrangement according to claim 1 or 2, whereby the transport units (16) are distributed separated from each other along the longitudinal direction of the stacked lumber (3) with the endless stripping elements (17) extending in the transverse direction of the stacked lumber.

4. The arrangement according to claim 3, comprising a suspension system (29) that is a component of each transport unit (16) by which the endless stripping element (17) is endlessly mobile under an upper frame (15) located above the stack (2) of timber and a support means (30) that is located within the closed pathway that is defined by the endless stripping element (17) and by which suspension system the stripping elements are individually suspended to pivot in the direction relative to the stack (2) of timber.

5. The arrangement according to claim 4, comprising a rotating limiting means (37) acting between the upper frame (15) and the support means (30), which means is selected to offer free passage of the support means in an upwards direction towards the upper frame (15) but limits the support means and the stripping element (17) in a downward direction towards the stack (2) of the timber.

## Patentansprüche

1. Anordnung zum Entstapeln von Holzstücklagen (3), insbesondere Platten und Brettern, umfassend eine in einem Winkel zur horizontalen Ebene geneigte Hubanordnung (1), die einen Holzstapel (2) stützt, einen Entladetransporter (43), der über dem Holzstapel angeordnet ist und durch Zusammenwirken mit der obersten Holzlage in dem Holzstapel senkrecht zur Längsrichtung des Holzes jeweils eine Lage entstapelt, wobei die entstapelte Holzlage einem nachfolgenden Sammeltransporter (42) und von dort einem Horizontaltransporter (10) zugeführt wird, wobei der Entladetransporter (43) auf eine Bewegung übertragende Weise mit einer Antriebsquelle (19) verbunden ist, mit der der Entladetransporter (43) zwischen zwei Betriebsmodi geschaltet werden kann, die einen Anhaltemodus, in dem der Entladetransporter (43) gegen Bewegung im Wesentlichen verriegelt ist, und einen aktiven Betriebsmodus, in dem der Entladetransporter (43) aktiv ist, umfassen, wobei, wenn der Entladetransporter (43) in seinen angehaltenen Modus geschaltet ist, die ganze Holzlage durch Zusammenwirken mit dem Entladetransporter auf dem Holzstapel (2) festgehalten wird, und wenn er in seinen aktiven Betriebsmodus geschaltet ist, die ganze Holzlage durch Zusammenwirken mit dem Entladetransporter vom Stapel zurückgezogen wird, wobei der Entladetransporter (43) und der nachfolgende Sammeltransporter (42) jeweils aus mehreren getrennten Transporteinheiten (16) bestehen, die jeweils ein mobiles Endlosentladeelement (17) aufweisen, das gedreht werden kann und dessen unterster Teil (18) dem Holz (3) zugekehrt ist, **dadurch gekennzeichnet, dass** der Entladetransporter (43) und der nachfolgende Sammeltransporter (42) unabhängig voneinander angetrieben werden und dass die Hubanordnung (1) dazu angeordnet ist zu starten, während Holz noch durch den nachfolgenden Sammeltransporter (42) transportiert wird.

2. Anordnung nach Anspruch 1, wobei der Sammeltransporter (42) auch zwischen einem aktiven Betriebsmodus und einem angehaltenen Modus geschaltet werden kann und dazu angeordnet ist, sich in seinem aktiven Betriebsmodus zum Vorwärtstransport einer ersten Holzlage zu befinden, während gleichzeitig eine folgende, zweite Holzlage durch Zusammenwirken mit dem Entladetransporter (43), der in seine angehaltene Position geschaltet ist, auf dem Holzstapel (2) festgehalten wird.

3. Anordnung nach Anspruch 1 oder 2, wobei die Transporteinheiten (16) entlang der Längsrichtung des gestapelten Holzes (3) getrennt voneinander verteilt sind, wobei sich die Endlosentladeelemente (17) in Querrichtung zum gestapelten Holz erstrecken.

4. Anordnung nach Anspruch 3, die ein Aufhängungssystem (29), das eine Komponente jeder Transporteinheit (16) ist, durch das das Endlosentladeelement (17 endlos beweglich ist, unter einem oberen Rahmen (15) umfasst, der über dem Holzstapel (2) und einem Stützmittel (30) positioniert ist, das sich in der geschlossenen Bahn befindet, die durch das Endlosentladeelement (17) definiert wird, und wobei die Entladeelemente durch das Aufhängungssystem einzeln aufgehängt werden, um in der Richtung bezüglich des Holzstapels (2) zu schwenken.

5. Anordnung nach Anspruch 4, die ein Drehbegrenzungsmittel (37) umfasst, das zwischen dem oberen Rahmen (15) und dem Stützmittel (30) wirkt, wobei das Mittel dazu ausgewählt ist, ein freies Passieren des Stützmittels in Aufwärtsrichtung zu dem oberen Rahmen (15) zu bieten, aber das Stützmittel und das Entladeelement (17) in Abwärtsrichtung zum Holzstapel (2) begrenzt.

## Revendications

1. Agencement pour le désempilage de couches de pièces de bois (3), en particulier des plaques et des planches, comprenant un agencement de levage (1), qui, incliné suivant un certain angle par rapport au plan horizontal, supporte une pile (2) de bois, un transporteur de désempilage (43) qui est situé au-dessus de la pile de bois et qui désempile une couche à la fois par interaction avec la couche supérieure de bois dans la pile de bois perpendiculairement à la direction longitudinale du bois, la couche de bois désempilée étant délivrée à un transporteur de collecte subséquent (42) et de là à un transporteur horizontal (10), le transporteur de désempilage (43) étant placé en relation, d'une manière qui permet de transférer le mouvement, avec une source d'entraînement (19) avec laquelle le transporteur de désempilage (43) peut être commuté entre deux modes de fonctionnement comprenant un mode d'arrêt dans lequel le transporteur de désempilage (43) est essentiellement verrouillé de manière immobile et un mode de fonctionnement actif dans lequel le transporteur de désempilage (43) est actif, le transporteur de désempilage (43), lorsqu'il est commuté dans son mode d'arrêt, faisant en sorte que toute la couche de bois soit retenue sur la pile de bois (2) par interaction avec ledit transporteur de désempilage, et lorsqu'il est commuté dans son mode de fonctionnement actif, toute la couche de bois est retirée de la pile par interaction avec ledit transporteur de désempilage, le transporteur de désempilage (43) et le transport de collecte subséquent (42) étant chacun constitué d'un certain nombre d'unités de transport séparées (16) ayant chacune un élément de désempilage mobile sans fin (17) qui peut être tourné et dont la partie inférieure (18) fait face au bois (3), **caractérisé en ce que** le transporteur de désempilage (43) et le transporteur de collecte subséquent (42) sont entraînés indépendamment l'un de l'autre et **en ce que** l'agencement de levage (1) est prévu pour commencer alors que le bois est encore en cours de transport par le transporteur de collecte subséquent (42).

2. Agencement selon la revendication 1, dans lequel le transporteur de collecte (42) peut aussi être commuté entre un mode de fonctionnement actif et un mode d'arrêt, et est prévu pour être dans son mode de fonctionnement actif pour transporter une première couche de bois vers l'avant tandis qu'en même temps, une deuxième couche suivante de bois est retenue sur la pile de bois (2) par interaction avec ledit transporteur de désempilage (43) qui est commuté dans sa position d'arrêt.

3. Agencement selon la revendication 1 ou 2, dans lequel les unités de transport (16) sont réparties séparément les unes des autres le long de la direction longitudinale du bois empilé (3) avec les éléments de désempilage sans fin (17) s'étendant dans la direction transversale du bois empilé.

4. Agencement selon la revendication 3, comprenant un système de suspension (29) qui fait partie de chaque unité de transport (16) permettant le déplacement continu de l'élément de désempilage sans fin (17) sous un cadre supérieur (15) situé au-dessus de la pile (2) de bois et un moyen de support (30) qui est situé dans le chemin fermé défini par l'élément de désempilage sans fin (17), ce système de suspension permettant de suspendre individuellement les éléments de désempilage de manière à ce qu'ils pivotent dans la direction par rapport à la pile (2) de bois.

5. Agencement selon la revendication 4, comprenant un moyen de limitation de rotation (37) agissant entre le cadre supérieur (15) et le moyen de support (30), lequel moyen est choisi pour permettre le libre passage du moyen de support dans une direction vers le haut vers le cadre supérieur (15) mais limite le moyen de support et l'élément de désempilage (17) dans une direction vers le bas vers la pile (2) de bois.
